# EUROPÄISCHE PATENTSCHRIFT

(11) **EP 2 684 281 B1**
(45) Veröffentlichungstag und Bekanntmachung des Hinweises auf die Patenterteilung: **01.11.2017**
(21) Anmeldenummer: 12717581.8
(22) Anmeldetag: 01.03.2012
(51) Int. Cl.: F04D 29/62, H02K 49/10, F04D 13/02

(54) **SPALTTOPF EINER MAGNETKUPPLUNG, INSBESONDERE EINER MAGNETKUPPLUNGSPUMPE**
SEPARATING CAN OF A MAGNETIC COUPLING, IN PARTICULAR OF A MAGNETIC COUPLING PUMP
CHEMISE D'ENTREFER D'UN ACCOUPLEMENT ÉLECTROMAGNÉTIQUE, NOTAMMENT D'UNE POMPE À ENTRAÎNEMENT MAGNÉTIQUE

(30) Priorität: 11.03.2011 DE 102011013829
(43) Veröffentlichungstag der Anmeldung: 15.01.2014
(73) Patentinhaber: Ruhrpumpen GmbH, 58453 Witten (DE)
(72) Erfinder: SCHNEIDER, Günther, 44627 Herne (DE); WESTIB, Michael, 44879 Bochum (DE); KOEP, Dirk, 45699 Herten (DE)
(74) Vertreter: Wettlaufer, Frank
(86) Internationale Anmeldenummer: PCT/DE2012/000206
(87) Internationale Veröffentlichungsnummer: WO 2012/122963

(56) Entgegenhaltungen:
- EP-A2- 1 188 970
- WO-A1-2010/136019
- DE-A1-102006 056 819
- FR-A- 923 196
- US-A- 3 270 910

## Beschreibung

Die Erfindung betrifft eine Magnetkupplung, insbesondere eine Magnetkupplungspumpe, welche einen Innenrotor und einen Außenrotor aufweist, die jeweils Magnete tragen, zwischen denen ein Spalttopf angeordnet ist, der einen Flansch aufweist, welcher Flansch vorzugsweise mit einem Gegenflansch an einer Kupplungskomponente, bevorzugt an einem Gehäusedeckel festlegbar ist.

Magnetkupplungspumpen sind allgemein bekannt, und zum Beispiel in der DE 10 2009 022 916 A1 beschrieben. Dabei wird die Pumpenleistung von einer Antriebswelle aus über einen Magnet tragenden Rotor (Außenrotor) berührungsfrei und im Wesentlichen schlupflos auf den pumpenseitigen Magnetträger (Innenrotor) übertragen. Der Innenrotor treibt die Pumpenwelle an, welche in einer vom Fördermedium geschmierten Gleitlagerung, also in einer hydrodynamischen Gleitlagerung gelagert ist. Zwischen dem Außenrotor und dem Innenrotor, also zwischen den Außen- und den Innenmagneten liegt der Spalttopf mit seiner zylindrischen Wand. Der Spalttopf ist mit seinem Flansch mit einer Pumpenkomponente, beispielsweise einem Gehäusedeckel verbunden, und weist gegenüberliegend dazu einen geschlossenen Boden auf. Der Spalttopf, also die Magnetkupplungspumpe trennt zuverlässig den Produktraum von der Umwelt, so dass die Gefahr eines Produktaustrittes mit allen damit verbundenen negativen Konsequenzen ausgeschlossen werden könnte. Eine Magnetkupplungspumpe ist demnach die Kombination aus einer konventionellen Pumpenhydraulik mit einem magnetischen Antriebssystem. Dieses System nutzt die Anziehungs- und Abstoßungskräfte zwischen Magneten in beiden Kupplungshälften zur berührungslosen und schlupflosen Drehmomentübertragung. Zwischen den zwei mit Magneten bestückten Rotoren befindet sich der Spalttopf, der Produktraum und Umgebung voneinander trennt. Besonders im Umgang mit sehr wertvollen oder sehr gefährlichen Stoffen birgt die Magnetkupplungspumpe demnach große Vorteile.

Spalttöpfe können aus unterschiedlichen Materialien wie z.B. aus Metallen unterschiedlichster Legierungszusammensetzungen, aus Kunststoff oder aus Keramik bestehen. Spalttöpfe aus Metall bewirken nachteiliger Weise Wirbelstromverluste, wobei Kunststoffspalttöpfe nur begrenzt Temperatur- und/oder Druckbeständig sind, was insbesondere bei hohen Mediumtemperaturen und/oder hohen Pumpendrücken nachteilig ist. Insofern haben sich in der Praxis Keramikspalttöpfe durchgesetzt, wobei neuerdings auch Spalttöpfe aus Glas (DE 10 2009 022 916 A1) bekannt werden.

Der Spalttopf wird über seinen Flansch mit der Pumpenkomponente bzw. mit der Kupplungskomponente verbunden, beispielsweise verschraubt, und bildet so gegebenenfalls unter Zwischenschaltung einer Dichtung (O-Ring) eine abgedichtete Verbindung. Die Pumpenkomponente, aber auch der Gegenflansch besteht dabei aus einem metallischen Werkstoff, welche jeweils zur Keramik des Spalttopfes unterschiedliche Materialeigenschaften haben, wobei z.B. unterschiedliche (thermische) Ausdehnungskoeffizienten zu erwähnen sind. Insofern können bei thermischer Beanspruchung der Metall-Keramik-Verbindung Verspannungen auftreten, wobei sich die metallischen Verbindungspartner mehr ausdehnen als der keramische Verbindungspartner. Diese Ausdehnungen leiten sich in die ursprünglich dichte Anlagefläche zwischen dem Flansch und der Pumpenkomponente weiter, so dass die ursprünglich abgedichtete Verbindung Leckagen aufweisen kann, da die vorgesehene Dichtung (O-Ring) quasi entspannt wird. Beispielsweise kann auch eine Kantenbelastung auftreten, wobei die metallische Komponente in den keramischen Flansch drückt, und diesen so zerstören kann (Anriss). Aber auch bei der Montage, also bei dem Anschrauben des Spalttopfes an die Pumpenkomponente ist äußerste Vorsicht geboten, da die Keramik des Spalttopfes auf ungünstige Spannungsübergänge bzw. Spannungsspitzen, also z.B. auf ungleichmäßiges Anziehen der Schrauben sehr sensibel reagiert, und ebenfalls zerstört werden kann. Die EP 1 188 970 A2 offenbart ein Ausgleichselement zwischen zwei lösbar zu verbindenden und statisch abzudichtenden Bauteilen.

Der Erfindung liegt die Aufgabe zugrunde, eine Magnetkupplung, insbesondere eine Magnetkupplungspumpe der Eingangs genannten Art zur Verfügung zustellen, bei welcher mit einfachen Mitteln eine stets abgedichtete Verbindung zwischen artfremden Verbindungspartnern, also z.B. zwischen dem Spalttopf und metallischen Verbindungspartnern auch bei thermischer Belastung und/oder bei Druckbelastung erreichbar ist, wobei zudem auch die Montage erleichtert werden soll.

Erfindungsgemäß wird die Aufgabe durch eine Magnetkupplung, insbesondere mit einer Magnetkupplungspumpe mit den Merkmalen des Anspruchs 1 gelöst.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Gemäß der Erfindung wird eine Magnetkupplung, insbesondere eine Magnetkupplungspumpe vorgeschlagen, welche einen Spalttopf aufweist, der einen Flansch hat, welcher Flansch mit einem Gegenflansch an einer Kupplungskomponente festlegbar ist. Zielführend ist dabei, dass der Flansch zumindest an seiner zum Gegenflansch orientierten Befestigungsseite eine Erhebung aufweist, welche in eine korrespondierend angepasste Vertiefung eingreift.

Günstig ist, wenn die Erhebung im Schnitt gesehen an ihrer zur Vertiefung orientierten Oberfläche verrundet ist, bevorzugt sphärisch, also quasi kugelabschnittsartig ausgeführt ist. Vorteilhaft wird aufgrund der sphärischen Ausgestaltung der Erhebung, bzw. aufgrund der quasi kugelabschnittsartigen Ausgestaltung der zur Vertiefung orientierten Oberfläche erreicht, dass bei mechanischer Vorspannung der Verbindung Spalttopf-Kupplungskomponente und/oder bei thermischer Ausdehnung der metallischen Komponente z.B. eine Kantenbelastung am Flansch, also zum Beispiel ein Anriss des Flansches vermieden wird, was zur Leckage führen könnte. Stattdessen werden schädliche Spannungsübergänge und/oder Spannungsspitzen vermieden. Zudem wird auch bei thermischer Beanspruchung bzw. bei Druckbeanspruchung vorteilhaft erreicht, dass durch die kugelabschnittsartige Anlage des Flansches in der korrespondierenden Vertiefung stets eine quasi zentrierte Montagelage sichergestellt ist. Insbesondere wird die artungleiche Verbindung der metallischen und keramischen Verbindungspartner einfacher herzustellen sein (Anziehen der Schrauben), da die sphärische Ausgestaltung gleichmäßige Spannungsübergänge ermöglicht. Insofern werden die Verbindungspartner durch die sphärische Ausgestaltung der Erhebung und der Vertiefung mit einfachen Mitteln quasi verstärkt, wobei stets eine punktartige oder linienartige Belastung vermieden ist, wobei stattdessen eine über die Kugeloberfläche erzeugte gleichmäßige Flächenbelastung erreicht wird.

Möglich ist, dass der Spalttopf aus einer gesinterten Keramik (z.B. Zirkonoxyd ZrO2) gebildet ist. Zweckmäßiger Weise ist die Erhebung in die Befestigungsseite des Flansches dann eingesintert, also einstückig mit dem Spalttopf bzw. mit dem Flansch hergestellt.

Zielführend ist, wenn der Gegenflansch als profil-sphärischer Ring ausgeführt ist, welcher kraftformschlüssig mit der besagten Komponente verbindbar, bevorzugt verschraubbar ist. Günstig ist, wenn der Gegenflansch die zur bevorzugt sphärischen Oberfläche bzw. Erhebung korrespondierende sphärische Vertiefung aufweist. Der Gegenflansch besteht bevorzugt aus einem metallischen Werkstoff, beispielsweise aus einem Edelstahl. Der Gegenflansch kann auch als Überwurfflansch bezeichnet werden. Die Vertiefung kann z.B. bei der Herstellung des Gegenflansches mit eingebracht werden, oder anschließend eingeformt werden.

Möglich ist, den Flansch ohne Verwendung eines Gegenflansches mit der Pumpenkomponente bzw. mit der Kupplungskomponente zu verbinden. Dabei kann eine Schraubenbohrung in dem Flansch vorgesehen sein, durch welche eine Schraube direkt mit der besagten Komponente verschraubbar ist. Zweckmäßiger Weise kann die Erhebung, bzw. die kugelabschnittsartige Oberfläche dann direkt in der Anlagefläche des Flansches zur Komponente eingesintert sein, wobei die korrespondierende Vertiefung in der besagten Komponente angeordnet ist.

Selbstverständlich liegt es durchaus im Sinne der Erfindung, die Vertiefung an der Befestigungsseite des Flansches vorzusehen, wobei die Erhebung am Gegenflansch bzw. an der besagten Komponente angeordnet wäre.

Die Lösung der Aufgabe gelingt aber auch mit einer Magnetkupplung, insbesondere mit einer Magnetkupplungspumpe welche einen Innenrotor und einen Außenrotor aufweist, zwischen denen ein Spalttopf angeordnet ist, der einen Flansch aufweist, welcher Flansch mit einem Gegenflansch an einer Kupplungskomponenten festlegbar ist, wobei zwischen dem Flansch und dem Gegenflansch ein Ausgleichselement angeordnet ist, welches an zumindest einer ersten Längsseite Eindrehungen, also Materialausnehmungen aufweist. Bevorzugt ist, wenn eine äquatoriale Eindrehung ausgehend vom Innenumfang in Richtung zum Außenumfang an der ersten Längsseite eingebracht ist. An einer zur ersten Längsseite gegenüberliegenden zweiten Längsseite sind bevorzugt äquatoriale Eindrehungen ausgehend vom Außenumfang in Richtung zum Innenumfang eingebracht. Eindrehungen im Sinne der Erfindung sind also Materialausnehmungen, welche von einem Außenumfang in Richtung zu einem Innenumfang oder von einem Innenumfang in Richtung zu einem Außenumfang geführt sind, ohne durchgängig zu sein. Sind die Eindrehungen mit ihrer Mittelachse senkrecht zu einer ebenen Oberfläche angeordnet, stellt dies im Sinne der Erfindung eine äquatoriale Eindrehung dar. Natürlich können die Eindrehungen mit ihrer Mittelachse auch winklig zur ebenen Oberfläche vorgesehen sein.

Günstig ist, wenn die zumindest erste Längsseite jeweils eine Eindrehung in einem Stirnseitenbereich aufweist, wobei zwischen den Eindrehungen ein Mittenabschnitt steht, in welchem an der zur besagten ersten Längsseite gegenüberliegenden zweiten Längsseite eine Materialausnehmung angeordnet ist. So wird quasi ein wellenartig ausgeführtes Ausgleichselement zur Verfügung gestellt, welches an seiner ersten Längsseite beispielhaft zwei Eindrehungen bzw. Materialausnehmungen und an seiner zweiten Längsseite eine Materialausnehmung bzw. Eindrehung hat. Natürlich soll diese beispielhafte Ausgestaltung nicht beschränkend sein. Denkbar ist die Anzahl von Eindrehungen und Materialausnehmungen an die jeweilige Situation, also an die zu erwartende Betriebssituation, z.B. hinsichtlich der zu erwartenden thermischen Belastung und/oder Druckbelastung anzupassen.

Zweckmäßig ist, wenn die im Stirnseitenbereich angeordneten Eindrehungen beispielhaft schlitzartig mit einem bevorzugt verrundeten Schlitzgrund ausgeführt sind. Die an der zweiten Längsseite angeordnete Materialausnehmung kann im Schnitt gesehen U-förmig mit einem Basissteg und zwei winklig dazu angeordneten U-Schenkeln ausgeführt sein, wobei die U-Schenkel senkrecht zu der Basis angeordnet sind. Bevorzugt kann vorgesehen sein, dass sich die U-Schenkel voneinander wegorientiert in einem stumpfen Winkel zur Basis angeordnet sind, so dass ein sich von dem Basissteg konusförmig erweiternde Materialausnehmung gebildet ist. Natürlich soll die beispielhaft genannte, geometrische Ausgestaltung der Eindrehungen und Materialausnehmungen nicht beschränkend wirken.

Die zweite Längsseite ist bevorzugt zur Wand des Spalttopfes orientiert.

Das Ausgleichselement kann mit seinen Stirnseiten plan zum einen an der Befestigungsseite des Flansches und zum anderen an der korrespondierenden Innenseite des Gegenflansches anliegen. Durch die besondere wellenartige, geometrische Ausgestaltung des Ausgleichselementes ist so ein Dehnungsausgleichselement geschaffen, welches bevorzugt einen thermischen Dehnungsausgleich bewirkt, welches aber auch eine Druckbelastung ausgleichen kann. Das bedeutet unter anderem, dass das Ausgleichselement den Dehnungsunterschied ausgleicht, wenn sich die metallischen Verbindungspartner bei thermischer Belastung mehr ausdehnen als der keramische Verbindungspartner, so dass die Anlagefläche zwischen Flansch und Kupplungskomponente bzw. Pumpenkomponente stets abgedichtet bleibt, die Dichtung also nicht entspannt wird. Durch das Ausgleichselement wird der montierte, vorgegebene Spannungsbetrag auch bei thermischer Ausdehnung der metallischen Partner aufrechterhalten, kann aber auch bei Druckbelastung aufrechterhalten bleiben.

In besonders bevorzugter Ausgestaltung kann vorgesehen sein, das Ausgleichselement an zumindest einer seiner Stirnseiten mit einer zur besagten sphärischen Ausgestaltung der Befestigungsseite ausgeführten sphärischen Vertiefung auszuführen. So kann die sphärische Erhebung in die korrespondierende sphärische Vertiefung eingreifen, so dass Spannungsspitzen und dergleichen vermieden sind.

Zweckmäßig ist, wenn beide Stirnseiten eine sphärische Ausgestaltung aufweisen. Dabei können beide Stirnseiten jeweils eine Vertiefung oder eine Erhebung aufweisen. Möglich ist aber auch, wenn eine der Stirnseiten eine Vertiefung und die andere eine Erhebung aufweist. Ist eine Stirnseite mit einer Erhebung und die andere mit einer Vertiefung ausgeführt ist die Einbaulage vorgegeben, was die Montage erleichtern kann. Bevorzugt kann die Einbaulage so vorgegeben werden, dass die Längsseite des Ausgleichselementes mit den schlitzartigen Eindrehungen, also die erste Längsseite zum Gegenflansch orientiert ist. Selbstverständlich ist korrespondierend zur gewählten Ausgestaltung eine entsprechende Vertiefung und/oder Erhebung am Flansch bzw. Gegenflansch vorzusehen.

Eine Ausgestaltung mit beidseits des Ausgleichselementes angeordneten sphärischen Erhebungen und/oder Vertiefungen ist besonders bevorzugt, da sich so eine besonders leichte Zentrierung und Vorspannung erreichen lässt.

Selbstverständlich können bei den unterschiedlichen Ausführungen noch Dichtungselemente vorgesehen sein, welches Dichtungselement zwischen der Kupplungskomponente und dem Flansch angeordnet sein kann. Das Dichtungselement kann ein O-Ring oder eine Flachdichtung sein, welcher bzw. welche sich in eine Dichtungsnut an dem Flansch oder der Kupplungskomponente (Pumpenkomponente (Gehäusedeckel) einlegen lässt.

Vorteilhaft ist, dass quasi eine sphärische Spannleiste bevorzugt an der Befestigungsseite des Flansches gebildet ist, welche in den Spalttopfflansch eingesintert ist. Mit dem Gegenflansch, also mit dem profil-sphärischen metallischen Ring wird der Spalttopfflansch niedergehalten, wobei der mechanisch bewirkte Dehnungsausgleich (Spannungsausgleich) mittels der sphärischen Ausgestaltung übernommen wird. Grundsätzlich geht die Erfindung dabei von Produkt- bzw Betriebstemperaturen von bis zu 100°C aus. Hier reicht es im Sinn der Erfindung aus, keinen thermisch bedingten Ausgleich zur Verfügung stellen zu müssen. Selbstverständlich können aber auch Produkt- bzw. Betriebstemperaturen von mehr als 100°C vorliegen. Insofern ist es günstig wenn zusätzlich noch ein Vorspannelement, also das Ausgleichselement vorgesehen wird, welches die sphärischen Vertiefungen an seiner bzw. an seinen Stirnseiten hat, wobei das Vorspannelement bzw. das Ausgleichselement den Dehnungsausgleich unter thermischen Bedingungen übernimmt, wobei die an dem Ausgleichselement stirnseitig angeordneten Vertiefungen in Zusammenwirken mit den Erhebungen am Flansch und Gegenflansch eine über die Kegelfläche erzeugte gleichmäßige Flächenbelastung bereitstellen.

Selbstverständlich kann die bevorzugt sphärische Erhebung bzw. Vertiefung in Umfangsrichtung des Flansches durchgehend sein, so dass quasi eine umlaufende sphärische Rippe gebildet ist. Denkbar ist aber auch eine in Umfangsrichtung gesehene Unterbrechung der Erhebung/Vertiefung so dass einzelne Erhebungen/Vertiefungen in Umfangsrichtung zu einander beabstandet sind. Möglich ist eine, zwei oder mehr Erhebungen/Vertiefungen vorzusehen, welche aber jeweils gleich zueinander beabstandet sein könnten. Gleiches gilt für die korrespondierenden Erhebungen/Vertiefungen. In bevorzugter Ausgestaltung ist das Ausgleichselement ringsförmig ausgeführt, also in Umfangsrichtung durchgehend.

Mit der Erfindung wird so eine konstante Verbindung, bevorzugt mit einer an die jeweiligen Montageerfordernissen vordefinierbaren, bzw. vorgebbaren Vorspannung aller beteiligten Bauteile gewährleistet. Insbesondere durch die sphärische Konstruktion (Erhebung/Vertiefung) wird eine Kantenbelastung am Flansch des keramischen Spalttopfes ausgeschlossen, welche Kantenbelastung bei konventionellen Ausführungen zu einem Anriss des Flansches und zu einer Leckage der Pumpe/Kupplung führt. Weiter werden mit der sphärischen Geometrie (Erhebung/Vertiefung) die Anzugskräfte gleichmäßig auf den Spalttopfflansch verteilt, wobei schädliche Spannungsübergänge sowie Spannungsspitzen auf den Flansch vermieden werden.

Natürlich soll die Erfindung nicht auf das Beispiel einer Magnetkupplungspumpe beschränkt sein. Vielmehr ist die Erfindung, also die sphärische Ausgestaltung der Erhebung und Vertiefung aber auch mit dem Ausgleichselement bei allen Materialverbindungen wie z.B. keramisch-metallischen; keramisch-keramischen, Kunststoff-Kunststoff, Kunststoff-Keramischen und/oder Kunststoff-metallischen Verbindungen denkbar.

Weitere vorteilhafte Ausgestaltungen der Erfindung sind in den Unteransprüchen und der folgenden Figurenbeschreibung offenbart. Es zeigen
Fig.1 einen Spalttopf mit einer sphärischen Erhebung an seinem Flansch und einer korrespondierenden Vertiefung am Gegenflansch,
Fig.2 den Spalttopf aus Figur 1 zusätzlich mit einem Ausgleichselement zwischen Flansch und Gegenflansch,
Fig.3 einen Ausschnitt des Spalttopfes gemäß Figur 2 in einer vormontierten Position in einer vergrößerten Darstellung,
Fig.4 einen Ausschnitt des Spalttopfes aus Figur 3 in einer vorgespannten Position in einer vergrößerten Darstellung, und
Fig. 5 einen Ausschnitt des Spalttopfes aus Figur 3 unter Betriebsbedingungen in einer vergrößerten Darstellung.

In den unterschiedlichen Figuren sind gleiche Teile stets mit denselben Bezugszeichen versehen, weswegen diese in der Regel auch nur einmal beschrieben werden.

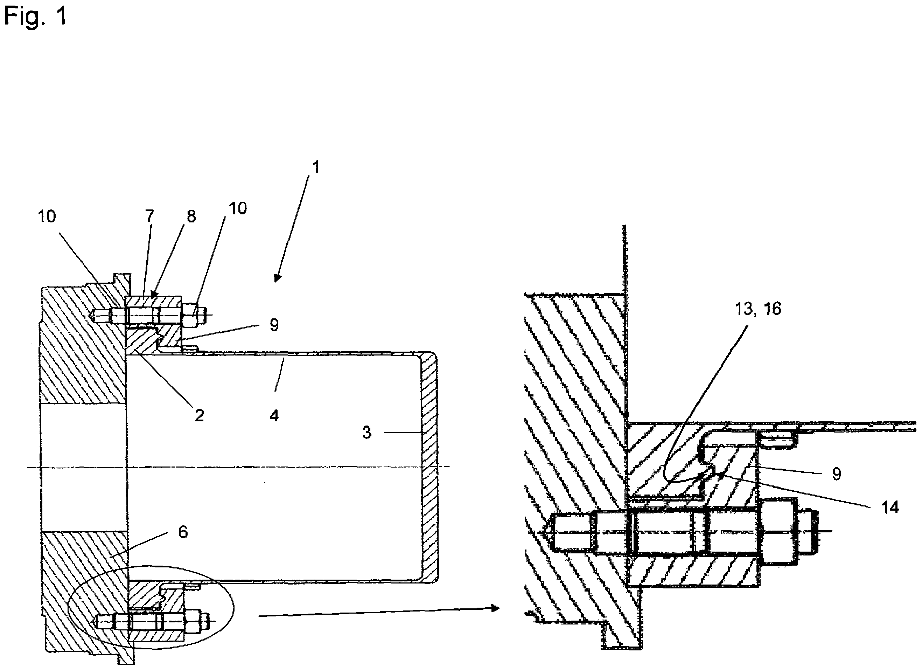

Figur 1 zeigt einen Spalttopf 1 z.B. einer Magnetkupplung, beispielsweise einer Magnetkupplungspumpe. Eine solche beispielhafte Magnetkupplungspumpe weist zum Beispiel einen Innenrotor und einen Außenrotor auf, welche jeweils Magneten aufweisen. Der Spalttopf 1 weist einen Flansch 2 und einen dazu gegenüberliegenden Boden 3 auf. Zwischen dem Boden 3 und dem Flansch 2 erstreckt sich eine im Wesentlichen zylindrische Wand 4. Die Wand 4 ist zwischen den Magneten des Innenrotors und des Außenrotors angeordnet, wobei ein Luftspalt vorgesehen ist. Bei der Magnetkupplungspumpe wird die Pumpenleistung von einer Antriebswelle aus über einen Magnet tragenden Rotor (Außenrotor) berührungsfrei und im Wesentlichen schlupflos auf den pumpenseitigen Magnetträger (Innenrotor) übertragen. Der Innenrotor treibt die Pumpenwelle an, welche in einer vom Fördermedium geschmierten Gleitlagerung, also einer hydrodynamischen Gleitlagerung gelagert ist. Zwischen dem Außenrotor und dem Innenrotor, also zwischen den Außen- und den Innenmagneten liegt der Spalttopf 1 mit seiner zylindrischen Wand 4. Der Spalttopf 1 ist mit seinem Flansch 2 mit einer Pumpenkomponente 6 bzw. mit einer Kupplungskomponente 6, beispielsweise einem Gehäusedeckel 6 verbunden, und weist gegenüberliegend dazu den geschlossenen Boden 3 auf. Der Spalttopf 1 trennt so im montierten Zustand das Fördermedium von der Umwelt und sollte leckagefrei sein. Die Komponente 6 wird im Folgenden als Kupplungskomponente 6, Pumpenkomponente 6 und/oder als Gehäusedeckel 6 bezeichnet.

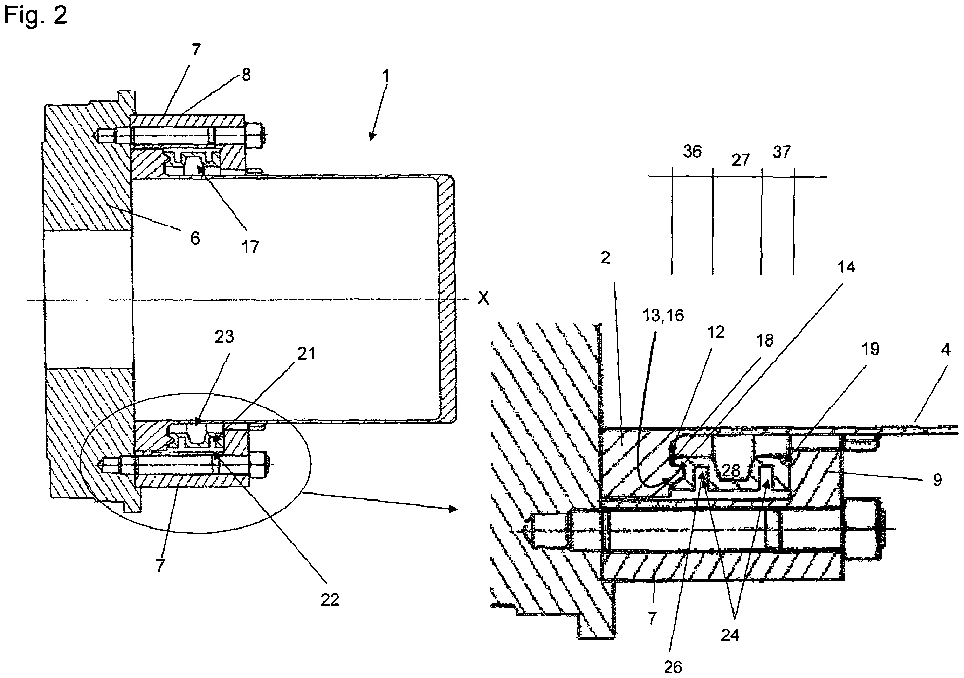

Der Spalttopf 1 ist mittels eines Gegenflansches 7 mit der Pumpenkomponente 6 verbindbar. Der Gegenflansch 7 weist einen Befestigungsabschnitt 8 und einen Halteabschnitt 9 auf. Der Gegenflansch 7 ist im Schnitt nach Figur 1 beispielhaft L-förmig ausgeführt. In dem Befestigungsabschnitt 8 ist eine Durchgangsbohrung in dem Gegenflansch 7 angeordnet. Die Durchgangsbohrung 8 wird von einer Schraube 10 durchgriffen, welche in eine Gewindebohrung 11 in der Pumpenkomponente 6 bzw. in dem Gehäusedeckel 6 einschraubbar ist. Bei dem in Figur 1 und 2 dargestellten Ausführungsbeispiel sind lediglich zwei Schrauben 10 dargestellt. Selbstverständlich können mehr als zwei Schrauben 9 vorgesehen werden, da der Gegenflansch 7 und auch der Flansch 2 ringförmig ausgeführt ist, was aber bekannt ist.

Der Spalttopf 1 gemäß der Erfindung besteht aus einer gesinterten Keramik, z.B. aus einem Zirkonoxyd (ZrO2). Die Pumpenkomponente 6 bzw. der Gehäusedeckel 6 und der Gegenflansch 7 sind aus einem metallischen Werkstoff gebildet. Beide beispielhaften Werkstoffe (Metall/Keramik) weisen naturgemäß unterschiedliche Werkstoffeigenschaften auf. Beispielsweise könnten ungleichmäßige Anzugskräfte schädliche Spannungsübergänge und Spannungsspitzen auf den Flansch übertragen, so dass dieser anreißen, also zerstört werden könnte, so dass die beispielhafte Magnetkupplungspumpe eine Leckage aufweisen könnte. Weiter weisen beide Werkstoffe unterschiedliche Ausdehnungskoeffizienten auf, so dass auch eine thermisch bedingte Leckage möglich ist.

Die Erfindung setzt bei einem spannungsbedingten Dehnungsausgleich an, wobei auch ein thermisch bedingter Dehnungsausgleich erzielbar ist.

In einer ersten Ausgestaltung nach Figur 1 weist der Flansch 2 an seiner Befestigungsseite 12 eine Erhebung 13 auf. Die Erhebung 13 greift in eine korrespondierende Vertiefung 14 an dem Gegenflansch 7 ein.

Die Erhebung 13 ist im Schnitt gesehen sphärisch ausgeführt, weist also eine kugeiabschnittsartige Oberfläche 16 auf. Die Vertiefung 14 ist dazu korrespondierend ausgeführt.

Vorteilhaft ist, dass die Erhebung 13 bevorzugt mittig an dem Flansch 2, bzw. an dessen Befestigungsseite 12 angeordnet ist. Die Erhebung 13 ist in bevorzugter Ausgestaltung in den Flansch 2 eingesintert.

Die Vertiefung 14 ist in dem Halteabschnitt 9 des Gegenflansches 7 angeordnet.

Durch die sphärische Geometrie sowohl der Erhebung 13 als auch der Vertiefung 14 werden die Anzugskräfte gleichmäßig auf den Spalttopf 1 bzw. auf dessen Flansch 2 verteilt, so dass schädliche Spannungsübergänge sowie Spannungsspitzen vermieden sind. Insbesondere wird mit der sphärischen Ausgestaltung eine über die Kugeloberfläche stete, gleichmäßige Flächenbelastung erreicht.

Bei dem in Figur 2 dargestellten Ausführungsbeispiel ist zwischen dem Flansch 2 des Spalttopfes 1 und dem Gegenflansch 7 ein Ausgleichselement 17 angeordnet. Der Befestigungsabschnitt 8 des Gegenflansches 7 ist bezogen auf das Ausführungsbeispiel zu Figur 1 entsprechend verlängert. Das Ausgleichselement 17 weist in bevorzugter Ausgestaltung an seiner ersten Stirnseite 18 eine zur Erhebung 13 korrespondierende Vertiefung 14 auf. Die dazu gegenüberliegende zweite Stirnseite 19 liegt plan an dem Gegenflansch 7 an. Denkbar ist auch die erste Stirnseite 18 plan an dem Flansch 2 bzw. an dessen Befestigungsseite 12 anliegen zu lassen.

Das Ausgleichselement 17 weist einen Grundkörper 21 auf, welcher zwischen seinen Stirnseiten 18 und 19 eine erste Längsseite 22 und eine dazu gegenüberliegende zweite Längsseite 23 aufweist. In der nach Figur 2 dargestellten Montageposition weist die erste Längsseite 22 in Richtung zum Gegenflansch 7 bzw. zur Schraube 10. Die zweite Längsseite 23 weist in Richtung zur Wand 4 des Spalttopfes 1 bzw. zu dessen Mittelachse X.

In der ersten Längsseite 22 sind beispielhaft schlitzartige Eindrehungen 24 angeordnet, deren Grund 26 verrundet sein kann, bevorzugt eben ausgeführt ist, und welche zur Längsseite 22 geöffnet sind. Die Eindrehungen 24 sind jeweils im Bereich der Stirnseiten 18 und 19, also in Stirnseitenbereichen 36 und 37 angeordnet, so dass beispielhaft zwei schlitzartige Eindrehungen 24 vorgesehen sind. Die Eindrehungen 24 können auch als äquatoriale Eindrehungen 24 bezeichnet werden, welche ausgehend vom Innendurchmesser in Richtung zum Außendurchmesser in die erste Längsseite 22 eingebracht sind. Zwischen den schlitzartigen Eindrehungen 24 steht ein Mittenabschnitt 27, in welchem eine Materialausnehmung 28 in der zur ersten Längsseite 22 gegenüberliegenden zweiten Längsseite 23 angeordnet ist. Die Materialausnehmung 28 ist im Schnitt gesehen beispielhaft annährend U-förmig bzw. lediglich beispielhaft als abgestumpfter Kegel ausgeführt. Die Materialausnehmung 28 kann analog zu den Eindrehungen 24 ebenfalls als äquatoriale Eindrehung bezeichnet werden, welche allerdings ausgehend vom Außendurchmesser in Richtung zum Innendurchmesser in die zweite Längsseite 23 eingebracht ist.

So ist vorteilhaft ein quasi wellenartiges Ausgleichselement 17 gebildet welches thermisch bedingte Dehnungen aber auch eine Druckbelastung ausgleichen kann, wobei aufgrund der sphärischen Ausgestaltung der zumindest einen Stirnseite 18 in Zusammenwirken mit der sphärischen Erhebung 13 auch schädliche Spannungsübergänge zumindest in Richtung zum Flansch 2 vermeidbar sind.

Zielführend im Sinne der Erfindung ist also, wenn das Ausgleichselement 17 zumindest an seiner ersten Stirnseite 18 mit einer zur sphärischen Erhebung 13 korrespondierenden Vertiefung 14 ausgeführt ist, da hier wiederum ungleiche Materialpaarungen vorliegen können. Der Flansch 2 besteht dabei aus einer Keramik, wobei das Ausgleichselement 17 aus einem metallischen Material, also zum Beispiel aus einem Edelstahl oder aus einem zum Gegenflansch 7 bevorzugt gleichen Werkstoff bestehen kann. Das Ausgleichselement 17 kann auch aus einem Edelstahl, z.B. aus einem hochwarmfesten Edelstahl. Als mögliches Material sind auch Duplexstähle oder Federstähle denkbar.

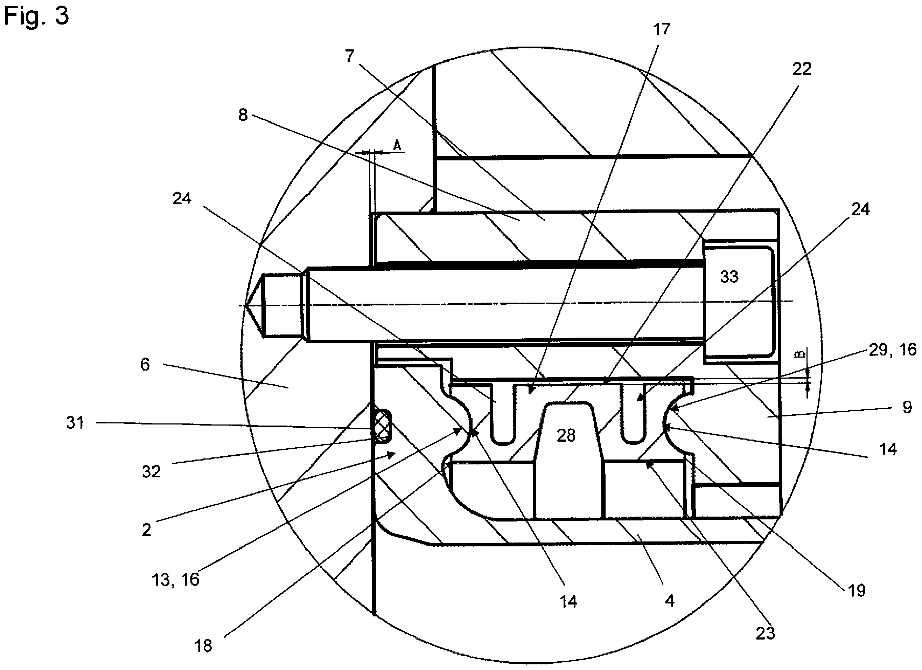

In den Figuren 3 bis 5 sind Vergrößerungen der Verbindung des Flansches 2 zum Gegenflansch 7 unter Zwischenschaltung des Ausgleichselementes 17 dargestellt. Allerdings weist das Ausgleichselement 17 im Unterschied zu der in Figur 2 gezeigten Ausführung an beiden Stirnseiten 18 und 19 eine sphärisch ausgeführte Vertiefung 14 auf, weswegen auch an dem Gegenflansch 7 bzw. an seinem Halteabschnitt 9 eine dazu korrespondierende Erhebung 29 angeordnet ist, welche so wie die Erhebung 13 mit einer sphärischen Oberfläche 16 ausgeführt ist.

In den Figuren 3 bis 5 ist noch ein Dichtungselement 31 erkennbar, welches zwischen dem Flansch 2 und der Pumpenkomponente 6 (Kupplungskomponente 6) bzw. dem Gehäusedeckel 6 angeordnet ist. Das Dichtungselement 31 kann ein O-Ring oder eine Flachdichtung sein, welcher bzw. welche in eine Dichtungsnut 32 eingelegt ist. Die Dichtungsnut 32 ist in dem Flansch 2 eingebracht, kann aber auch in der Komponente 6 bzw. in dem Gehäusedeckel 6 eingebracht sein. In den Figuren 1 und 2 ist eine solche Dichtung nicht erkennbar, kann aber vorhanden sein. Zudem ist in den Figuren 3 bis 5 eine in dem Gegenflansch 7 mit ihrem Schraubenkopf 33 versenkte Schraube 9 dargestellt.

In Figur 3 ist ein vormontierter Zustand des Flansches 2 an der Pumpenkomponente 6 dargestellt. Dies ist anhand des Spaltmaßes A zwischen dem Befestigungsabschnitt 8 des Gegenflansches 7 und der Pumpenkomponente 6, aber auch anhand des Spaltmaßes B zwischen der ersten Längsseite 22 und dem Befestigungsabschnitt 8 des Gegenflansches 7 erkennbar. In diesem vormontierten Zustand können Schrauben 10 umfangsmäßig leicht angezogen werden, ohne dass Verbindungspartner zueinander dicht anliegen würden.

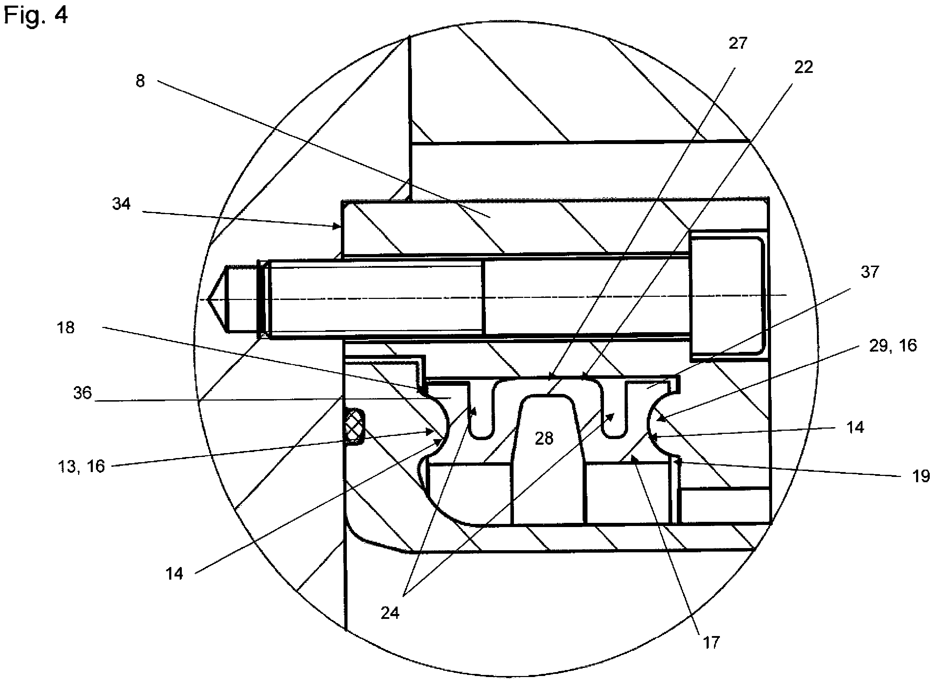

Durch weiteres Anziehen der Schrauben 9 wird der vorgespannte Zustand erreicht, wie dieser in Figur 4 dargestellt ist. Die Spaltmaße A und B sind gleich NULL, was bedeutet, dass der Befestigungsabschnitt 8 mit seiner Stirnseite 34 an der Pumpenkomponente 6 und die erste Längsseite 22 mit dem Mittenabschnitt 27 an dem Befestigungsabschnitt 8 anliegt. Die zum Mittenabschnitt 27 seitlich angeordneten Stirnseitenbereiche 36 und 37 der ersten Längsseite 22 sind nicht in Kontakt mit dem Befestigungsabschnitt 8. Mit anderen Worten wird das Ausgleichselement 17 bei der Vorspannung quasi in Längsrichtung gesehen, also in der Blattebene der Figur 4 gesehen verspannt, wobei die Verspannung durch die Flexibilität der Geometrie auch unter starker Vorspannung maßlich und funktionell erhalten bleibt.

Aufgrund der sphärischen Ausgestaltung der Erhebungen 13 und 29 im Zusammenspiel mit den sphärischen Vertiefungen 14 in den Stirnseiten 18 und 19 des Ausgleichselementes 17 werden so bei dem Vorspannen schädliche Spannungsübergänge zur Keramik (Flansch 2) sowie Spannungsspitzen vermieden.

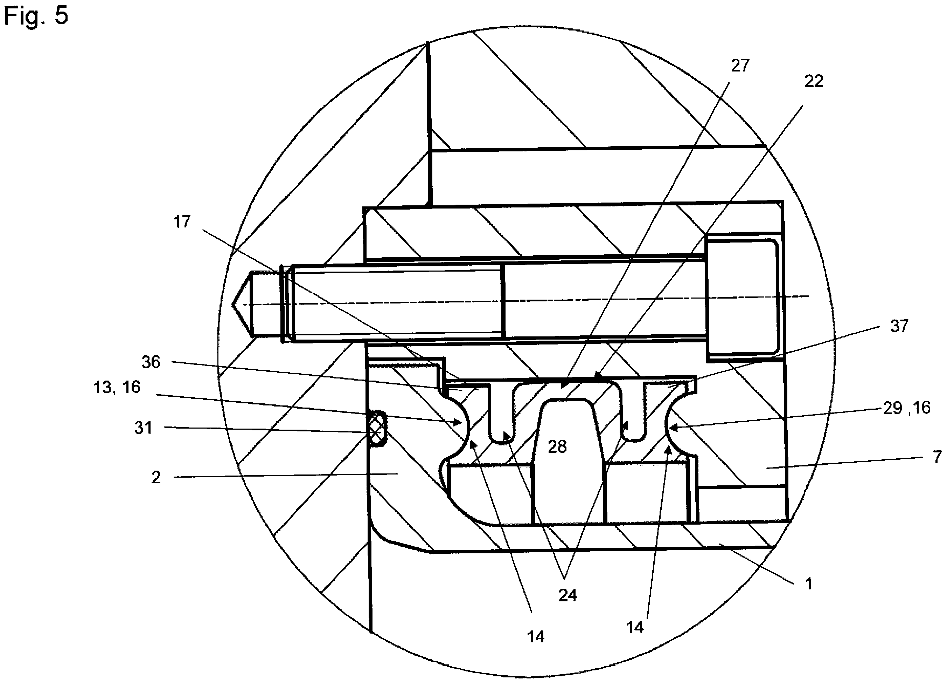

In Figur 5 ist ein Betriebszustand dargestellt. Wird die Vorspannung (Figur 4) beispielsweise bei einer Temperatur von 20°C hergestellt, kann unter Betriebsbedingungen eine Temperatur von z.B. 250°C vorliegen, was zum Beispiel aufgrund entsprechend heißem Medium denkbar ist. Diese hohe Temperatur bewirkt nun unterschiedliche Ausdehnungen des keramischen und der metallischen Bauteile, welche von dem Ausgleichselement 17 kompensiert werden. Wie in Figur 5 erkennbar, wird das Ausgleichselement 17 thermisch bedingt radial und axial verformt, dass heißt das Ausgleichselement 17 dehnt sich entsprechend der vorhandenen Wärme, wobei der Kontakt des Mittenabschnitt 27 zum Befestigungsabschnitt 8 (Figur 4) nach Figur 5 noch nicht vollständig aufgehoben wird. Auch die Stirnseitenbereiche 36 und 37 sind nicht in Anlagekontakt. Die thermische Ausdehnung des metallischen Gegenflansches 7 aber auch der Pumpenkomponente 6 wird so von dem Ausgleichselement 17 kompensiert, ohne dass der keramische Spalttopf 1 bzw. sein Flansch 2 schaden nehmen kann. Diese vorteilhafte Wirkung wird auch von den sphärischen Anlagepartnern 13,14 und 29,14 unterstützt. Zudem bewirkt das Ausgleichselement 17 durch den thermisch bedingten Dehnungsausgleich, dass die Vorspannung zwischen dem Flansch 2 und der Komponente 6 unverändert aufrechterhalten wird, was bedeutet, dass die Dichtung 31 nicht entspannt wird, wodurch Leckagen vermieden sind. Das Ausgleichselement 17 könnte also quasi als Federelement bezeichnet werden, welches thermische Dehnungen kompensiert, wobei auch Druckbelastungen kompensierbar sind.

### Bezugszeichenliste:

- 1: Spalttopf
- 2: Flansch
- 3: Boden
- 4: Wand
- 5 6: Pumpen-/Kupplungskomponente/Gehäusedeckel
- 7: Gegenflansch
- 8: Befestigungsabschnitt
- 9: Halteabschnitt
- 10: Schraube
- 11: Gewindebohrung
- 12: Befestigungsseite
- 13: Erhebung
- 14: Vertiefung
- 15 16: Kugelabschnittsartige Oberfläche
- 17: Ausgleichselement
- 18: Erste Stirnseite
- 19: Zweite Stirnseite
- 20 21: Grundkörper
- 22: Erste Längsseite
- 23: Zweite Längsseite
- 24: Eindrehungen
- 25 26: Grund
- 27: Mittenabschnitt
- 28: Materialausnehmung
- 29: Erhebung an 9
- 30 31: Dichtungselement
- 32: Dichtungsnut
- 33: Schraubenkopf
- 34: Stirnseite von 8
- 35 36: Stirnseitenbereich von 22
- 37: Stirnseitenbereich von 22

## Patentansprüche

1. Magnetkupplungspumpe, welche einen Spalttopf (1) aufweist, der einen Flansch (2) hat, welcher Flansch (2) mit einem Gegenflansch (7) an einer Kupplungskomponente (6) festlegbar ist, **dadurch gekennzeichnet, dass** der Flansch (2) zumindest an seiner zum Gegenflansch (7) orientierten Befestigungsseite eine Erhebung (13) aufweist, welche in eine korrespondierend angepasste Vertiefung (14) eingreift, wobei zwischen dem Flansch (2) und dem Gegenflansch (7) ein Ausgleichselement (17) angeordnet ist, welches an seiner ersten Längsseite (22) Eindrehungen (24) aufweist, welche in Stirnseitenbereichen (36,37) angeordnet sind, wobei zwischen den Eindrehungen (24) ein Mittenabschnitt (27) steht, welcher eine Materialausnehmung (28) an einer zur ersten Längsseite (22) gegenüberliegenden Längsseite (23) aufweist.

2. Magnetkupplungspumpe nach Anspruch 1, **dadurch gekennzeichnet, dass** die Erhebung an ihrer Oberfläche (16) verrundet, bevorzugt sphärisch ausgestaltet ist.

3. Magnetkupplungspumpe nach Anspruch 1 oder 2, **dadurch gekennzeichnet, dass** die Erhebung (13) in den Flansch (2) bzw. in dessen Befestigungsseite (12) eingesintert ist.

4. Magnetkupplungspumpe nach einem der vorhergehenden Ansprüche, **dadurch gekennzeichnet, dass** der Gegenflansch (7) als profil-sphärischer Ring ausgeführt ist.

5. Magnetkupplungspumpe nach einem der vorhergehenden Ansprüche, **dadurch gekennzeichnet, dass** die Erhebung (13) in Umfangsrichtung durchgehend an dem Flansch (2) angeordnet ist.

6. Magnetkupplungspumpe nach einem der vorhergehenden Ansprüche, **dadurch gekennzeichnet, dass** die Eindrehungen (24) schlitzartige Eindrehungen sind.

7. Magnetkupplungspumpe nach einem der vorhergehenden Ansprüche, **gekennzeichnet durch** ein zwischen dem Flansch (2) und dem Gegenflansch (7) angeordnetes Ausgleichselement (17), welches an zumindest einer seiner Stirnseiten (18,19) eine zu einer Erhebung (13) oder Vertiefung (14) des Flansches (2) korrespondierende Vertiefung (14) oder Erhebung (13) aufweist.

8. Magnetkupplungspumpe nach einem der vorhergehenden Ansprüche **gekennzeichnet durch** ein zwischen dem Flansch (2) und dem Gegenflansch (7) angeordnetes Ausgleichselement (17), welches an seinen beiden Stirnseiten (18,19) eine sphärisch ausgeführte Vertiefung (14) aufweist, wobei eine Erhebung (13) des Flansches (2) in die eine Vertiefung (14) und eine Erhebung (29) des Gegenflansches (7) in die andere Vertiefung (14) eingreift.

## Claims

1. Magnetic coupling pump which has a split case (1) which has a flange (2), which flange (2) can be fixed to a corresponding flange (7) on a coupling component (6), **characterized in that** the flange (2) has an elevation (13) at least on its fastening side which is oriented towards the corresponding flange (7), which elevation (13) engages into a correspondingly adapted depression (14), a balancing element (17) being arranged between the flange (2) and the corresponding flange (7), which balancing element (17) has turned grooves (24) on its first longitudinal side (22), which turned grooves (24) are arranged in the end side regions (36, 37), a centre section (27) lying between the turned grooves (24), which centre section (27) has a material recess (28) on a longitudinal side (23) which lies opposite the first longitudinal side (22).

2. Magnetic coupling pump according to Claim 1, **characterized in that** the elevation on its surface (16) is of rounded, preferably spherical configuration.

3. Magnetic coupling pump according to Claim 1 or 2, **characterized in that** the elevation (13) is sintered into the flange (2) or into its fastening side (12).

4. Magnetic coupling pump according to one of the preceding claims, **characterized in that** the corresponding flange (7) is configured as a ring with a spherical profile.

5. Magnetic coupling pump according to one of the preceding claims, **characterized in that** the elevation (13) is arranged on the flange (2) in a continuous manner in the circumferential direction.

6. Magnetic coupling pump according to one of the preceding claims, **characterized in that** the turned grooves (24) are slot-like turned grooves.

7. Magnetic coupling pump according to one of the preceding claims, **characterized by** a balancing element (17) which is arranged between the flange (2) and the corresponding flange (7) and, on at least one of its end sides (18, 19), has a depression (14) or elevation (13) which corresponds to an elevation (13) or depression (14) of the flange (2).

8. Magnetic coupling pump according to one of the preceding claims, **characterized by** a balancing element (17) which is arranged between the flange (2) and the corresponding flange (7) and has a spherically configured depression (14) on its two end sides (18, 19), an elevation (13) of the flange (2) engaging into the one depression (14), and an elevation (29) of the corresponding flange (7) engaging into the other depression (14).

## Revendications

1. Pompe à entraînement magnétique, qui présente une chemise d'entrefer (1), qui comporte une bride (2), bride (2) qui peut être fixée avec une bride opposée (7) à un élément de couplage (6), **caractérisée en ce que** la bride (2) présente au moins sur son côté de fixation orienté vers la bride opposée (7) une saillie (13), qui s'engage dans un creux adapté de façon correspondante (14), dans laquelle un élément de compensation (17) est disposé entre la bride (2) et la bride opposée (7), qui présente sur son premier côté longitudinal (22) des renfoncements (24), qui sont disposés dans des régions de côté frontal (36, 37), dans laquelle il se trouve entre les renfoncements (24) un partie centrale (27), qui présente un évidement de matière (28) sur un côté longitudinal (23) opposé au premier côté longitudinal (22).

2. Pompe à entraînement magnétique selon la revendication 1, **caractérisée en ce que** la saillie est arrondie à sa surface (16), elle est de préférence de forme sphérique.

3. Pompe à entraînement magnétique selon la revendication 1 ou 2, **caractérisée en ce que** la saillie (13) est frittée dans la bride (2) ou dans la face de fixation (12) de celle-ci.

4. Pompe à entraînement magnétique selon l'une quelconque des revendications précédentes, **caractérisée en ce que** la bride opposée (7) est réalisée en forme d'anneau à profil de sphère.

5. Pompe à entraînement magnétique selon l'une quelconque des revendications précédentes, **caractérisée en ce que** la saillie (13) est disposée sur la bride (2) de façon continue en direction périphérique.

6. Pompe à entraînement magnétique selon l'une quelconque des revendications précédentes, **caractérisée en ce que** les renfoncements (24) sont des renfoncements en forme de fentes.

7. Pompe à entraînement magnétique selon l'une quelconque des revendications précédentes, **caractérisée par** un élément de compensation (17) disposé entre la bride (2) et la bride opposée (7), qui présente sur au moins une de ses faces frontales (18, 19) un creux (14) ou une saillie (13) correspondant à une saillie (13) ou à un creux (14) de la bride (2).

8. Pompe à entraînement magnétique selon l'une quelconque des revendications précédentes, **caractérisée par** un élément de compensation (17) disposé entre la bride (2) et la bride opposée (7), qui présente sur ses deux faces frontales (18, 19) un creux de forme sphérique (14), dans lequel une saillie (13) de la bride (2) s'engage dans un premier creux (14) et une saillie (29) de la bride opposée (7) s'engage dans l'autre creux (14).
